Europäisches Patentamt

European Patent Office

Office européen des brevets

(19)

(11) EP 0 470 506 B1

(12) **EUROPÄISCHE PATENTSCHRIFT**

(45) Veröffentlichungstag und Bekanntmachung des Hinweises auf die Patenterteilung:
16.07.1997 Patentblatt 1997/29

(51) Int Cl.⁶: **G01N 21/35**, G01N 22/00, G08B 19/02, G01N 21/47, G01W 1/02

(21) Anmeldenummer: 91112940.1

(22) Anmeldetag: 01.08.1991

(54) **Infrarot-Mikrowellen-Sensorsystem zur Erkennung des Fahrbahnzustandes**

Infrared-microwave-sensor system for recognition of road conditions

Système détecteur à l'infrarouge et à micro-ondes pour reconnaître l'état de la chaussée

(84) Benannte Vertragsstaaten:
**AT CH DE FR GB IT LI**

(30) Priorität: 04.08.1990 DE 4024842
20.12.1990 DE 4040842

(43) Veröffentlichungstag der Anmeldung:
12.02.1992 Patentblatt 1992/07

(73) Patentinhaber: **Daimler-Benz Aerospace Aktiengesellschaft**
**81663 München (DE)**

(72) Erfinder: **Schmitt, Klemens, Dr.**
**W-7900 Ulm (DE)**

(74) Vertreter: **Fröhling, Werner Otto, Dr. et al**
**Daimler-Benz Aerospace AG**
**Patentabteilung**
**Sedanstrasse 10**
**89077 Ulm (DE)**

(56) Entgegenhaltungen:
DE-A- 2 712 199      DE-A- 3 023 444
US-A- 3 836 846

**Beschreibung**

Die Erfindung betrifft ein Sensorsystem zur Erkennung des Oberflächenzustands auf einer Fahrbahn gemäß Oberbegriff des Patentanspruchs 1.

Die Erfindung der genannten Art wird u.a. im Straßenverkehr und auf Rollbahnen von Flughäfen zur Identifizierung des Oberflächenzustands (trocken, naß oder vereist) eingesetzt und kommt daher im Bereich der Verkehrsüberwachung zum Einsatz.

Aus der DE-A-3-023 444 ist eine Straßenzustandsermittlungseinrichtung bekannt, die einen Infrarot(IR)-Sender und mehrere IR-Empfänger enthält, deren Signale mittels eines Komparator-Netzwerks aufbereitet und zur Zustandsanzeige über eine Logikschaltung verknüpft sind.

Aus US-A-3 836 846 ist eine Straßenzustandsermittlungseinrichtung bekannt, die einen Mikrowellen(MW)-Sender und -Empfänger enthält, bei dem zur Ermittlung des Oberflächenzustands der Straße die reflektierte Mikrowellenleistung ausgewertet wird.

Beide Einrichtungen sprechen aufgrund ihrer unterschiedlichen Meßsignalbereiche (IR-Bereich bzw. MW-Bereich) auf unterschiedliche Oberflächenzustände der Straßen unterschiedlich an und liefern dementsprechend Erkennungsergebnisse über den Oberflächenzustand.

Die Aufgabe der Erfindung besteht darin, ein Sensorsystem zur Erkennung des Oberflächenzustands auf einer Fahrbahn anzugeben, das unabhängig vom jeweiligen Oberflächenzustand möglichst zuverlässige Erkennungsergebnisse liefert.

Die erfindungsgemäße Lösung ist in dem Patentanspruch 1 beschrieben. In dem Unteranspruch ist eine vorteilhafte Ausbildung der Erfindung aufgeführt.

Der erfindungsgemäße Lösungsgedanke besteht darin, daß ein Infrarot-Sender und -Empfänger mit Filtern ausgebildet ist und in Kombination mit einem Mikrowellen-Sender und -Empfänger betrieben wird. Die Signale der IR- bzw. MW-Empfänger werden mittels logischer Netzwerke, wobei darunter ein oder mehrere Komparatoren bzw. ein oder mehrere Gatter/Flip Flops zu verstehen sind, aufbereitet und über ein oder mehrere Gatter miteinander verknüpft. Am Ausgang des Gatters und der logischen Netzwerke oder am Ausgang der Gatter sind Zustandsanzeigen ausgebildet. Mittels eines XOR-Gatters werden die einzelnen Zustandsanzeigen auf ihre Funktionsrichtigkeit überprüft. Das Ergebnis kann seinerseits über eine eigene Zustandsanzeige zur Anzeige gebracht werden.

Mithin ist eine Anordnung zum Nachweis des Fahr-/Rollbahnzustands ausbildbar, die sich durch ihre hohe Nachweissicherheit auszeichnet. Des weiteren ist das IR-System breitbandig und das Gesamtsystem einfach herstellbar. Das IR-Teilsystem arbeitet vorzugsweise im Wellenlängenbereich von ca. 2,4 bis 3,2 µm, da hier starke Änderungen der reflektierten Leistung als Funktion der Wellenlänge bei Eis oder Wassr auf Oberflächen beobachtet werden können und mit der vorliegenden Anordnung besonders einfach zu erfassen sind. Das MW-Teilsystem arbeitet vorzugsweise bei Wellenlängen kleiner als 15 cm, da hier auch dünne Wasserschichten bereits eine starke Zunahme der reflektierten Leistung aufweisen und die MW-Strahlung auch mit relativ kleinen Antennen gut gebündelt werden kann. Die erfindungsgemäße Anordnung sowie ihre Weiterbildungen sind leicht, materialsparend und preiswert herstellbar.

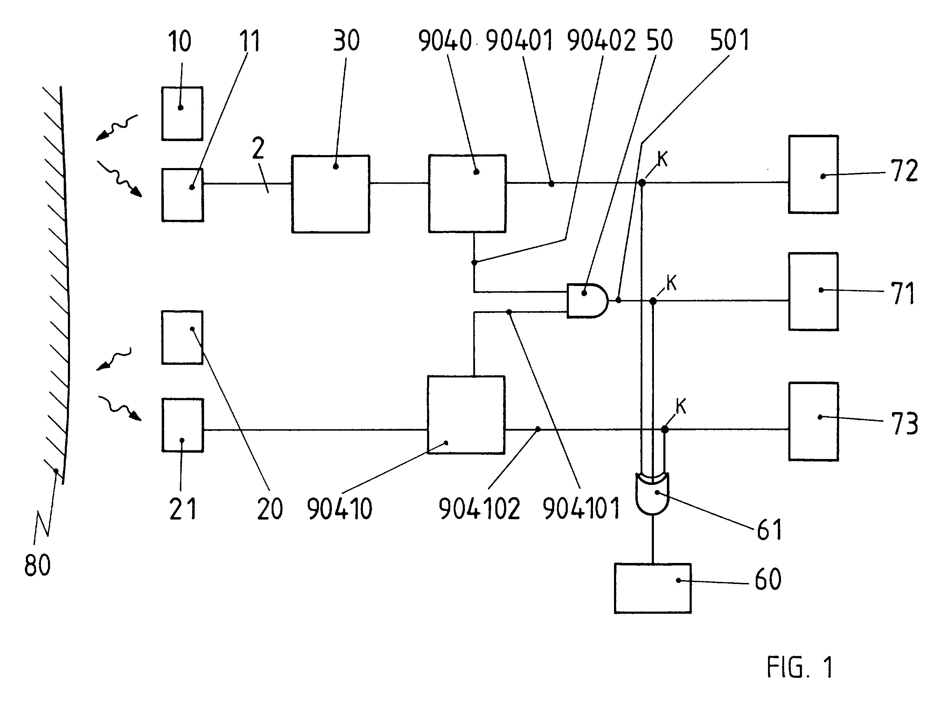

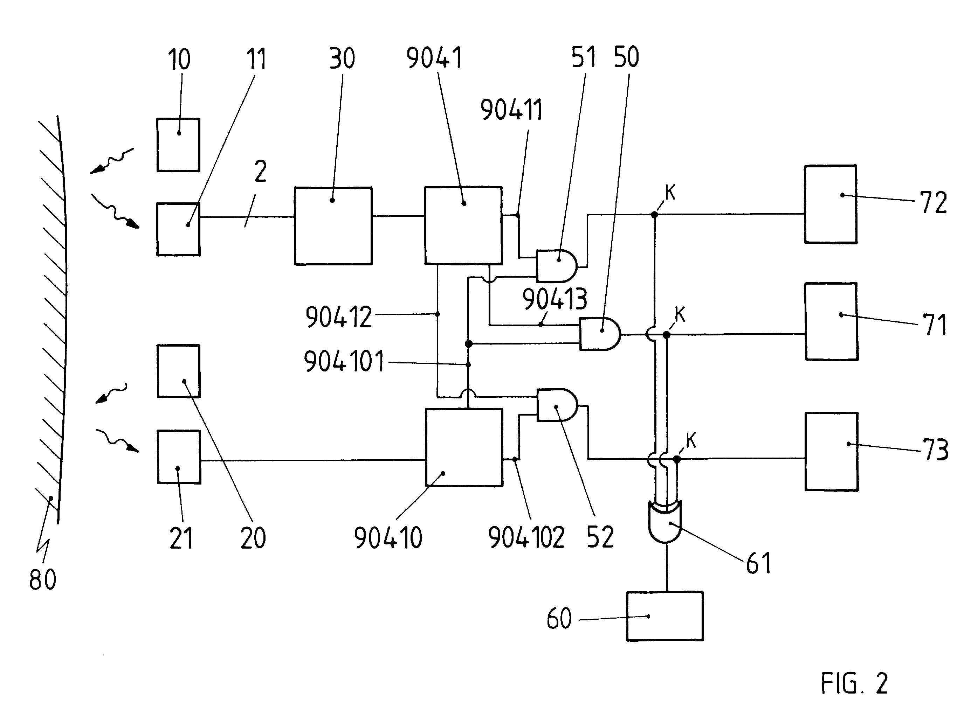

Im folgenden wird die Erfindung anhand von FIG. 1 und 2 näher erläutert. Es zeigen:

FIG. 1   das Blockschaltbild der erfindungsgemäßen Anordnung;

FIG. 2   das Blockschaltbild einer Weiterbildung der erfindungsgemäßen Anordnung.

Die erfindungsgemäße Anordnung nach FIG. 1 ist wie folgt ausgebildet.

Ein erster (zweiter) Sender 10 (20) und ein erster (zweiter) Empfänger 11 (21) sind jeweils unter etwa dem gleichen Winkel $\alpha$ ($\beta$) gegen die Normale zur Fahrbahnoberfläche, auch Oberfläche 80 genannt, angeordnet. Der erste Sender 10 ist eine IR-Quelle, z. B. eine Halogenlampe. Sie emittiert in Richtung der zu untersuchenden Oberfläche 80 eine breitbandige Strahlung. Ein Teil der von der Oberfläche 80 reflektierten Strahlung gelangt in den Eingang des Empfängers 11. Am Eingang des Empfängers 11 (wahlweise auch bereits am Ausgang des ersten Senders 10) wird die Strahlung spektral gefiltert, so daß nur noch Strahlung mit bestimmten Wellenlängen $\lambda_1$ und $\lambda_2$ und korrespondierenden Bandbreiten $\Delta\lambda_1$ und $\Delta\lambda_2$ in die IR-Detektoren des ersten Empfängers 11 gelangt.

Durch die Detektoren wird die empfangene IR-Leistung in etwa proportionale Signalspannungen $U_{\lambda 1}$ und $U_{\lambda 2}$ umgewandelt.

Die vom zweiten Sender 20, der ein MW-Sender ist, über eine Antenne (z.B. Hornantenne) abgestrahlte elektromagnetische Welle wird ebenfalls teilweise, dem Oberflächenzustand entsprechend, von der Oberfläche 80 reflektiert und mit einer Antenne des zweiten Empfängers 21 empfangen. Die empfangene Leistung $P_{RMWi}$ wird in eine etwa proportionale Signalspannung $U_{MWi}$ umgewandelt.

Die Mikrowellenmessung kann bei mehreren Frequenzen $f_i$, z. B. den ISM-Frequenzen um 2,45 GHz, 24,125 GHz und 61,25 GHz, stattfinden.

Das Reflexionsverhalten elektromagnetischer Strahlung im IR- bzw. MW-Bereich an dielektrischen Grenzschichten (z. B. der Oberflächen 80) hängt dabei vom Zustand dieser Oberflächen ("trocken", "naß" bzw. mit einer Wasserschicht bedeckt, "vereist" bzw. mit einer Eisschicht bedeckt) ab. Im IR-Bereich treten bei Wasser und Eis Absorptionsbanden auf, in deren Umgebung eine starke spektrale Änderung der dielektrischen Konstanten und damit des Reklexionskoeffizienten vorliegt.

Die Absorptionsbanden von Wasser und Eis, z. B. im Wellenlängenbereich um 3 $\mu$m, sind dabei nur geringfügig um ein Wellenlängenintervall von etwa 0,1 $\mu$m gegeneinander verschoben .

Durch die erfindungsgemäß geeignete Wahl der Wellenlängen $\lambda_1$ (in etwa 2,6 $\mu$m) und $\lambda_2$ (in etwa 3$\mu$m) und korrespondierender Intervalle $\Delta\lambda_1$ (in etwa ± 15 % von $\lambda_1$) und $\Delta\lambda_2$ (in etwa ± 15 % von $\lambda_2$) kann aus der spektralen Abhängigkeit der von der Fahrbahn reflektierten Leistung auf entweder den Zustand "trocken" oder den Zustand "naß" bzw. "vereist" der Oberfläche 80 geschlossen werden.

Im Mikrowellenbereich besitzt Wasser eine wesentlich höhere Dielektrizitätszahl ($\varepsilon_r \approx 20 - 80$) als Materialien, die für Fahrbahnen etc. verwendet werden. Für Eis hingegen hat die Dielektrizitätszahl einen Wert von ca. $\varepsilon_r \approx 2$. Dieser Wert ist niedriger als der Wert der meisten Dielektrika, die als Materialien für Fahrbahnen mit der Oberfläche 80 verwendet werden.

In diesem Fall resultiert für eine mit einer Eisschicht bedeckte Oberfläche 80 ein Wert für den Reflexionskoeffizienten und damit für die reflektierte Leistung, der kleiner oder gleich dem Wert des Reflexionskoeffizienten für eine trockene Oberfläche 80 ist, und der eine periodische Funktion der Dicke d der Eisschicht ist. Der Abstand der Maxima und Minima beträgt $\lambda_E/2$. $\lambda_E$ ist die Wellenlänge im Dielektrikum. Die reflektierte Leistung ist also stets kleiner oder gleich dem Grenzwert $P_o$. $P_o$ ist der Wert der reflektierten Leistung bei trockener Fahrbahn. Eine Modulation des Wertes der reflektierten Leistung als Funktion der Schichtdicke d, die aus einer Interferenz der an den verschiedenen Grenzschichten reflektierten Welle resultiert, tritt auch bei Wasser auf. Diese Modulation ist jedoch vor allem bei höheren Frequenzen, z. B. 24 GHz, 35 GHz, 61 GHz wegen der höheren dielektrischen Verluste von Wasser nur schwach ausgeprägt. Der resultierende Wert für die reflektierte Leistung $P_{RMWi}$ ist für jede signifikante Wasserschichtdicke größer als der Grenzwert $P_o$.

$P_o$ ist der Wert der reflektierten MW-Leistung, der einer Grenzspannung $U_{MWO}$ entspricht.

Das Reflexionsvermögen für Mikrowellenstrahlung an mit Wasser bedeckten Oberflächen 80 steigt bereits bei geringen Wasserschichtdicken (d $\approx$ 0,1 mm) stark an. Aus dem Anstieg der reflektierten Mikrowellenleistung $P_{RWMi}$ über den Grenzwert $P_o$ wird erfindungsgemäß festgestellt, daß eine nasse Fahrbahn (Oberfläche 80) vorliegt. Ist dieses nicht der Fall ($P_{RWMi} \leq P_o$) so liegt eine trockene oder mit Eis bedeckte Oberfläche vor.

Als Meßfrequenz können, wie bereits erwähnt, z. B. die ISM-Frequenzen um 2,45 GHz, 24,125 GHz und 61,25 GHz gewählt werden.

Im ersten Empfänger 11 werden die bei den Meßwellenlängen $\lambda_1$ und $\lambda_2$ empfangenen Leistungen mittels Detektoren in etwa proportionale Signalspannungen $U_{\lambda 1}$ und $U_{\lambda 2}$ umgewandelt.

Anschließend wird in einem Signalverkoppler 30 der Quotient $U_{\lambda 1}/U_{\lambda 2}$ gebildet, der einer Spannung $U_{IR}$ entspricht ($U_{\lambda 1}/U_{\lambda 2} \approx U_{IR}$). Die Wellenlänge $\lambda_1$ und $\lambda_2$ und die korrespondierenden lenlängenintervalle $\Delta\lambda_1$ und $\Delta\lambda_2$ sind z.B. so gewählt, daß für mit einer Wasser- bzw. Eisschicht bedeckte Oberflächen 80 eine Signalamplitude $U_{IR} < U_{IRO}$ resultiert. Der Wert $U_{IRO}$ ist hierbei ein von der Wellenlänge $\lambda_1$ und $\lambda_2$ und den Wellenlängenintervallen $\Delta\lambda_1$ und $\Delta\lambda_2$ abhängender charakteristischer Wert. So folgt z. B. für:

$$\lambda_1 = 2,6\ \mu m,\ \lambda_2 = 3,0\ \mu m$$

$$\Delta\lambda_1,\ \Delta\lambda_2 = 0,4\ \mu m$$

bei Wasser:

$$U_{\lambda 1}/U_{\lambda 2} = U_{IRW} \approx 0,41$$

bei Eis:

$$U_{\lambda 1}/U_{\lambda 2} = U_{IRE} \approx 0,32$$

Mithin dürfen für das IR-Teilsystem relativ große Bandbreiten $\Delta\lambda_{1,2}$ gewählt werden, wobei eine der Meßwellenlängen $\lambda_i$ auch außerhalb der Absorptionsbanden liegen kann.

Bei trockenen Oberflächen 80 ist keine signifikante Abhängigkeit des Reflexionskoeffizienten von der Wellenlänge vorhanden, sodaß hier ein Wert $U_{\lambda 1}/U_{\lambda 2}\, U_{IRT} \approx 1$ resultiert.

Für den Grenzwert $U_{IRO}$ eines Komparators, der Bestandteil des Netzwerkes 9040 ist, welches seriell der Signalverkopplung 30 folgt, kann hierbei ein Wert von ca. $\approx 0,5 - 0,8$ gewählt werden.

Der zweite Empfänger 21 (Mikrowellenempfänger) des Sensorsystems wandelt die bei einer Frequenz $f_i$ empfangene Strahlung in eine etwa proportionale Spannung $U_{MWi}$ um. Ist diese Spannung kleiner oder gleich einem Grenzwertes $U_{MWO}$, so liegt eine trockene oder vereiste Oberfläche 80 vor, bzw. eine Oberfläche 80 mit einer sehr geringen Wasserfilmdicke, die keine ausreichend hohe Reflexion bewirkt. Bei einer Meßfrequenz von ca. $f = 24,125$ GHz ist dieses für Wasserfilmdicken $\lesssim 50\ \mu m$ der Fall. Im entgegengesetzten Fall, $U_{MWi} > U_{MWO}$, liegt eine nasse Oberfläche vor.

Diese Zustände werden elektrisch durch einen Komparator, der Bestandteil des zweiten Netzwerkes 90410 ist, ermittelt. Durch die logische Verknüpfung des jeweils auftretenden IR- und eines MW-Signales in einem ersten UND-Gatter 50, welches an jeweils einem Ausgang des ersten (9040) und zweiten (90410) Netzwerkes ausgebildet ist, und der digitalen Anzeige des jeweiligen Zustandes der drei Signalausgänge an einer ersten (71), zweiten (72) bzw. dritten (73) Zustandsanzeige, - wobei der Zustand 0 = "falsch" und der Zustand 1 = "wahr" bedeutet -, werden Schalter in den Zustandsanzeigen 71, 72, 73 gesteuert.

Für den Oberflächenzustand "trocken" ($U_{MWi} \leq U_{MWO}$, $U_{IRT} \geq U_{IRO}$ mit $U_{IRT} = (U_{\lambda 1} / U_{\lambda 2})$trocken) ist der Signalausgang 90401 des IR-Komparators und der Ausgang 904101 des MW-Komparators geschlossen (Zustand 1) und der Ausgang 90402 ist offen (Zustand 0).

Die Ausgänge 501 und 904102 sind ebenfalls offen. Die Anzeige 72 ("trocken") wird aktiviert.

Für den Oberflächenzustand "naß/Wasser" gilt: $U_{MWi} > U_{MWO}$ und $U_{IRW} < U_{IRO}$). Hier sind die Ausgänge 904102 und 90402 geschlossen, die Ausgänge 904101 (und damit auch 501) sowie 90401 sind offen. Der Ausgang 73 ("naß") wird aktiviert.

Für den Oberflächenzustand "vereist" gilt:

$U_{MWi} \leq U_{MWO}$ und $U_{IRE} < U_{IRO}$. Hier sind die Ausgänge 90401 und 904102 offen und die Ausgänge 90402 und 904101 geschlossen (Zustand 1). Damit ist auch der Ausgang des UND-Gatters, 501, geschlossen und die Anzeige 71 ("vereist") wird aktiviert.

Von den jeweiligen drei Schaltern des Systems ist im regulären Betriebszustand genau einer geschlossen (Zustand 1). Dieses entspricht einer eindeutigen Anzeige jeweils eines Oberflächenzustandes ("trocken", "naß", "vereist") der Oberfläche 80.

Um die Eindeutigkeit der Anzeige zu überprüfen, werden die Signale über die Anschlußbuchsen k einem Antivalenzgatter 61 ("XOR-gate") zugeführt und dort miteinander verknüpft. Diese Kontrollschaltung für das Sensorsystem zeigt über die Anzeige (60) beim Ausgangswert 1 eine eindeutige Messung an, beim Wert 0 liegt eine Störung vor. In diesem Fall sind vom IR- und MW-Teilsystem gelieferten Signale widersprüchlich, es werden mehrere Zustände oder kein Zustand angezeigt.

Die Anschlußbuchsen k sind erfindungsgemäß jeweils an den Signalpfad zwischen:

- dem Netzwerk 9040 und der zweiten Zustandsanzeige 72,
- dem ersten Gatter 50 und der ersten Zustandsanzeige 71,
- dem Netzwerk 90410 und der dritten Zustandsanzeige 73 gemäß FIG. 1 angeordnet;

bzw. zwischen:

- dem ersten Gatter 50 und der ersten Zustandsanzeige 71,
- dem zweiten Gatter 51 und der zweiten Zustandsanzeige 72,
- dem dritten Gatter 52 und der dritten Zustandsanzeige 73 gemäß FIG. 2 angeordnet.

Die erfindungsgemäßen Weiterbildung nach FIG. 2 besteht darin, daß bereits mit dem IR-Teilsystem die drei Zustände trocken, naß und vereist eindeutig differenziert werden. Werte für und $\lambda_1$, $\lambda_2$ und $\Delta\lambda_1$, $\Delta\lambda_2$ liegen im Intervall von etwa 2,0 - 3,2 $\mu m$ und sind dort anordnungsmäßig frei wählbar. Für die dort ermittelten Meßbereiche kann ein entsprechender IR-Signalvergleichswert $U_O$ gefunden werden, mit dem sich die drei Oberflächenzustände voneinander abgrenzen lassen. Bevorzugt ist ["$\approx$" steht für "ca."]:

$$\lambda_1 \approx 2{,}8\ \mu m,\ \lambda_2 \approx 3{,}0\ \mu m\ \text{und}\ \Delta\lambda_1 \approx \Delta\lambda_2 \approx 0{,}05\ \mu m$$

Es folgt für Eis:

$$U_{IR} = U_{\lambda 1}/U_{\lambda 2} \approx 0{,}27$$

und für Wasser:

$$U_{IR} = U_{\lambda 1}/U_{\lambda 2} \approx 0,16$$

während bei trockener Oberfläche 80

$$UIR = U_{\lambda 1}/U_{\lambda 2} \approx 1$$

folgt.

Als Grenzwert zwischen Eis und Wasser kann in diesem Beispiel $U_O = 0,2$ für den Komparator 9041 gewählt werden.

Für nasse Oberflächen ist $U_{IR} < U_o$. In diesem Fall wird nur der IR-Komparatorausgang 90412 geschlossen (Zustand 1), die Signalausgänge 90411 und 90413 bleiben offen (Zustand 0).

$U_{MWi}$ ist bei nasser Oberfläche größer als $U_{MWO}$, so daß der Ausgang 904102 ebenfalls geschlossen ist. Der andere Ausgang des MW-Komparators, 904101, ist offen. Der Ausgang des UND-Gatters 52 wird somit geschlossen und der Zustand "naß/Wasser" mittels der Anzeige 73 angezeigt.

Bei vereisten Oberflächen gilt z.B. $U_0 \leq U_{IR} < 2\,U_0$. In diesem Fall ist nur der IR-Komparatorausgang 90413 geschlossen. Bei mit Eis bedeckten Oberflächen gilt weiter $U_{MWi} \leq U_{MWO}$, so daß nur der MW-Komparatorausgang 904101 geschlossen ist.

Somit hat für diesen Fall nur das UND-Gatter 50 einen geschlossenen Ausgang (Zustand 1). Die Anzeige 71, "vereist", wird aktiviert.

Bei trockener Oberfläche gilt für die Ausgangsspannung $U_{IR}$ des Signalverkopplers (30) in diesem Beispiel $U_{IR} \geq 2U_O$. In diesem Fall ist nur der Ausgang 90411 des IR-Komparators 9041 geschlossen.

Das MW-Signal hat wiederum - wie bei vereister Oberfläche - einen Wert $U_{MWi} \leq U_{MWO}$. Wiederum ist nur der Ausgang 904101 des MW-Komparators 90410 geschlossen. Somit wird für den Oberflächenzustand trocken nur das Gatter 51 geschlossen und nur die Anzeige 72, "trocken", aktiviert. Zusammenfassend ergibt sich für dieses Beispiel, daß die UND-Gatter 50, 51 oder 52 an ihren Ausgängen dann geschlossen sind (Zustand 1), d.h. über die Komparatoren 9041 und 90410 an beide Gattereingänge eine logische 1 gelangt, wenn folgende Bedingungen gelten:

| Gatterausgang im Zustand 1: Gatter | Komparator-Spannungswerte: | |
|---|---|---|
| | IR-Komparator (9041) | MW-Komparator (90410) |
| 50 | $U_O \leq U_{IR} < 2U_O$ = vereist | $U_{MWi} \leq U_{MWO}$ = trocken oder vereist |
| 51 | $U_{IR} < U_O$ = naß | $U_{MWi} > U_{MWO}$ = naß |
| 52 | $U_{IR} \geq 2\,U_O$ = trocken | $U_{MWi} \leq U_{MWO}$ = trocken oder vereist |

Die logische Verknüpfung der drei IR-Ausgangssignale, die einen der drei Oberflächenzustände 80 beschreiben, mit den Signalen des MW-Teilsystems über UND-Gatter 50, 51 und 52, bewirkt wiederum eine Redundanz des Systems.

Während bei der IR-Reflexionsmessung auf die zu untersuchende Oberfläche 80 eine Lichtintensität fällt, deren Wert unter Umständen zu einem Auftauen einer ursprünglich vorhandenen Eisschicht und damit zu einer lokalen Veränderung des zu messenden Umgebungszustandes führen kann, ist bei Mikrowellenreflexionsmessung aufgrund der in diesem Spektralbereich höheren Empfängernachweisempfindlichkeit und der Schmalbandigkeit des zweiten Senders 21 mit wesentlich kleineren abgestrahlten Leistungen und mit geringeren auf die Meßoberfläche beaufschlagten Intensitäten arbeitbar, sodaß hier ein zusätzliches Auftauen einer vorhandenen Eisschicht oder die Verhinderung der Bildung einer Eisschicht und damit eine Verfälschung des Meßergebnisses nicht zu erwarten ist.

Die Oberfläche 80, welche die Mikrowellenstrahlung reflektiert, ist vorzugsweise nicht von den Anteilen der Oberfläche 80 überdeckt, die von der IR-Quelle (z.B. Halogenlampe) ausgeleuchtet wird, da diese ansonsten u. U. aufgetaut ist und somit eine in den Zustand naß "verfälschte" Oberfläche darstellt.

Unter dieser Voraussetzung ermöglicht das mit FIG. 1 beschriebene System auch dann noch einen zuverlässigen Nachweis von vereisten Oberflächen, wenn der von der IR-Quelle angeleuchtete Teil der Oberfläche durch die IR-Strahlung aufgetaut wurde, da bei diesem System mit der IR-Teilmessung nicht zwischen Wasser und Eis differenziert wird. Eine Differenzierung findet beim FIG. 1 entsprechenden System erst nach Verknüpfung des IR-Signales mit dem MW-Signal in einem UND-Gatter statt.

**Patentansprüche**

1. Sensorsystem zur Erkennung des Oberflächenzustandes auf einer Fahrbahn, <u>dadurch gekennzeichnet</u>, daß

   - ein Infrarotsender (10) und -empfänger (11) mit Filtern ausgebildet ist und zum kombinierten Betrieb mit einem Mikrowellensender (20) und -empfänger (21) verknüpft ist;

   - die Signale der Infrarot- bzw. Mikrowellenempfänger (11, 21) mittels logischer Netzwerke (9040, 90410 bzw. 9041, 90410), wobei darunter ein oder mehrere Komparatoren bzw. ein oder mehrere Gatter/Flip Flops zu verstehen sind, aufbereitet sind und ausgangsseitig über ein oder mehrere Gatter miteinander verknüpft sind;

   - am Ausgang des Gatters und der logischen Netzwerke oder am Ausgang der Gatter Zustandsanzeigen (71, 72, 73) ausgebildet sind;

   - mittels eines XOR-Gatters (61) die einzelnen Zustandsanzeigen (71, 72, 73) auf ihre logische Zustandsrichtigkeit überprüft sind; und

   - das Ergebnis seinerseits über eine eigene Zustandsanzeige (60) zur Anzeige gebracht ist.

2. Sensorsystem nach Anspruch 1, dadurch gekennzeichnet, daß die IR-Anordnung breitbandig ausgelegt ist und durch beliebige Filter spektral ausrichtbar ist.

**Claims**

1. Sensor system for the recognition of the surface state on a travel path, characterised thereby that

   - an infrared emitter (10) and infrared receiver (11) is constructed with filters and linked for combined operation with a microwave emitter (20) and microwave receiver (21);

   - the signals of the infrared and microwave receivers (11, 21) are processed by means of logic networks (9040, 90410 and 9041, 90410), wherein to be understood by this are one or more comparators or one or more gates/ flip-flops, and interlinked at the output side by way of one or more gates;

   - state indicators (71, 72, 73) are formed at the output of the gate and the logic networks or at the output of the gates;

   - the individual state indicators (71, 72, 73) are checked for their logic state correctness by means of an XOR gate (61); and

   - the result is in turn brought to indication by way of an own state indicator (60).

2. Sensor system according to claim 1, characterised thereby that the infrared arrangement is designed to be wideband and spectrally alignable by any filter.

**Revendications**

1. Système détecteur pour reconnaître l'état de surface d'une chaussée, caractérisé par le fait que

   - un émetteur à infrarouge (10) et un récepteur à infrarouge (11), avec des filtres, sont prévus et sont reliés logiquement à un émetteur de micro-ondes (20) et à un récepteur de micro-ondes (21) pour une exploitation combinée;

   - les signaux des récepteurs à infrarouge ou des récepteurs de micro-ondes (11, 21) sont traités au moyen de réseaux logiques (9040, 90410, ou 9041, 90410), étant précisé que sous ce nom il faut comprendre un ou plusieurs comparateurs ou une ou plusieurs portes/bascules, et, du côté sortie, sont logiquement reliés l'un à l'autre par l'intermédiaire d'une ou plusieurs portes;

   - à la sortie de la porte et des réseaux logiques ou à la sortie des portes sont prévues des positions d'indication d'état (71, 72, 73);

- l'exactitude logique de l'état des différentes positions d'indication d'état (71, 72, 73) sont vérifiées au moyen d'une porte OU exclusif XOR (61) et
- de son côté, le résultat est indiqué au moyen d'une position d'indication d'état propre (60).

2. Système détecteur selon la revendication 1, caractérisé par le fait que le dispositif IR est prévu en bande large et peut être centré au point de vue spectral au moyen de filtres quelconques.

FIG. 1

EP 0 470 506 B1

10  11  30  9041  51  50

90411

2

90412

90413

904101

21  20  90410  904102  52

80

61

60

72

71

73

K

K

K

FIG. 2